# EUROPEAN PATENT APPLICATION

(11) **EP 1 702 544 A1**
(43) Date of publication of application: **20.09.2006**
(21) Application number: 06111005.2
(22) Date of filing: 13.03.2006
(51) Int. Cl.: A47J 31/40

(54) **Beverage preparing method for beverage dispenser and beverage dispenser**

(30) Priority: 18.03.2005 JP 2005079978
(71) Applicant: Sanden Corporation, Isesaki-shi, Gunma 372-8502 (JP)
(72) Inventor: Sadakata, Hideki, Isesaki-shi Gunma Gunma 372-8502 (JP); Akuzawa, Takayuki, Isesaki-shi Gunma Gunma 372-8502 (JP); Ishikawa, Kimihisa, Isesaki-shi Gunma Gunma 372-8502 (JP); Sato, Takeshi, Isesaki-shi Gunma Gunma 372-8502 (JP); Toriumi, Takahiro, Isesaki-shi Gunma Gunma 372-8502 (JP)
(74) Representative: Haley, Stephen

(57) **Abstract**

An espresso-based beverage is prepared by putting a prescribed quantity of milky foam powder (31) into a cup (CP); injecting a prescribed quantity of hot water (33) from a jet nozzle (13) into the cup (CP) to dissolve and beat the milky foam powder (31) to generate milky foam (34) ; and pouring a prescribed quantity of espresso coffee (35) from a coffee supplying pipe (16) into the cup (CP).

## Description

The present invention relates to a beverage preparing method to be executed by a beverage dispenser and a beverage dispenser which makes possible execution of the method.

In accordance with recent fad for European-styled coffees, a beverage dispenser is demanded to sale espresso-based beverages comparable to cafe in flavor and looks.

In order to provide purchaser with cappuccino, coffee latte or coffee con panna, namely espresso-based beverages each including espresso coffee and foamed milk or whipped cream (hereinafter collectively referred to as milky foam) on the espresso coffee, a beverage dispenser having at least a coffee extractor capable of extracting espresso coffee; a material supplier separately accommodating espresso ground-coffee, milky foam powder, sugar powder and so on; a mixing ball with an agitator for generating milky foam; and a hot water generator capable of supplying hot water to the coffee extractor and the mixing ball is necessary.

For preparing sugarless cappuccino, for instance, in the above beverage dispenser, it is necessary to control operations for extracting espresso coffee by putting ground-coffee and hot water into the coffee extractor, and for generating milky foam by putting milky foam powder and hot water into the mixing ball and agitating them, and for putting the espresso coffee into a cup, and for put the milky foam on the espresso coffee in the cup.

Since the mixing ball is used every time the milky foam is generated, in order to keep the mixing ball sanitary, an operation control indispensably requires a process of putting hot water into the mixing ball with the agitator and washing it after use. However, the washing with the hot water cannot be always perfect, and there is the danger to generate molds or the like. Therefore, there is some doubt whether the espresso-based beverages are sanitarily prepared or not.

An object of the present invention is to provide a beverage preparing method for beverage dispenser permitting sanitary preparation of espresso-based beverages and a beverage dispenser which makes possible execution of the method.

In order to achieve the object, a beverage preparing method for beverage dispenser involved with the present invention comprises the steps of putting a prescribed quantity of milky foam powder into a cup; injecting a prescribed quantity of hot water from a jet nozzle into the cup to dissolve and beat the milky form powder to generate milky foam; and pouring a prescribed quantity of espresso coffee from a coffee supplying pipe into the cup.

A beverage dispenser involved with the present invention comprises a milky foam powder supplier for putting a prescribed quantity of milky foam powder into a cup; a hot water supplier for supplying a prescribed quantity of hot water to the cup through a jet nozzle; a espresso coffee supplier for pouring a prescribed quantity of espresso coffee into the cup through a coffee supplying pipe; and a beverage preparation means for controlling operations of the suppliers so as to put the prescribed quantity of the milky foam powder into the cup, and to inject the prescribed quantity of the hot water from the jet nozzle into the cup to dissolve and beat the milky foam powder to generate milky foam, and to pour the prescribed quantity of the espresso coffee from the coffee supplying pipe into the cup.

According to the beverage preparing method described above, espresso-based beverages can be prepared in a more sanitary way by forming milky foam in the cup than the conventional method by which milky foam is formed by using a mixing ball with an agitator and putting the milky foam so formed into a cup, and moreover serves to prevent a temperature drop of the milky foam and accordingly of the espresso-based beverage that is prepared.

Further, according to the beverage dispenser described above permits secure execution of this beverage preparing method.

This and other objects, features and advantages of the present invention will become more apparent from the following description and accompanying drawings.

**In the Drawings;**
FIG. 1 shows a configuration of a device for brewing espresso-based beverage in an embodiment of the present invention;
FIG. 2 is a flow chart of a method of preparing the espresso-based beverage;
FIG. 3 shows a state on the way of preparing the espresso-based beverage;
FIG. 4 shows a state farther on the way of preparing the espresso-based beverage;
FIG. 5 shows a state still farther on the way of preparing the espresso-based beverage;
FIG. 6 shows a state yet farther on the way of preparing the espresso-based beverage; and
FIG. 7A and FIG. 7B show partially modified versions of the flow chart of FIG. 2.

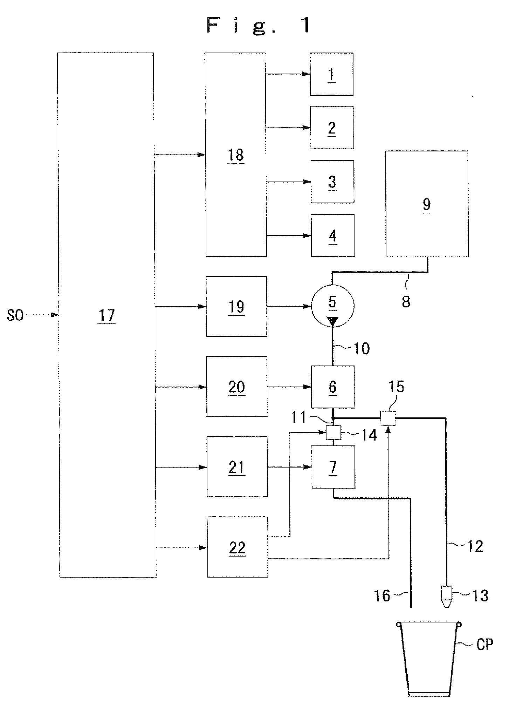

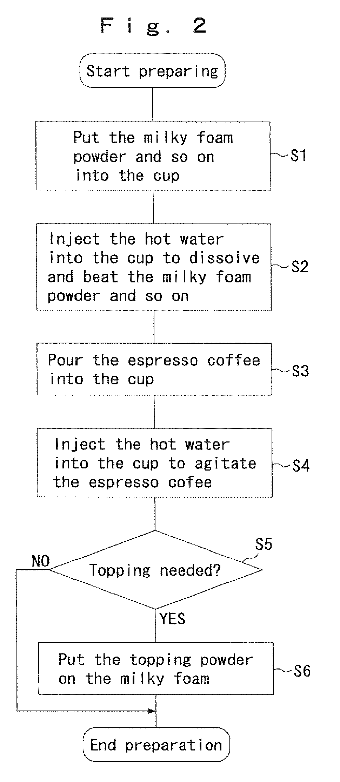

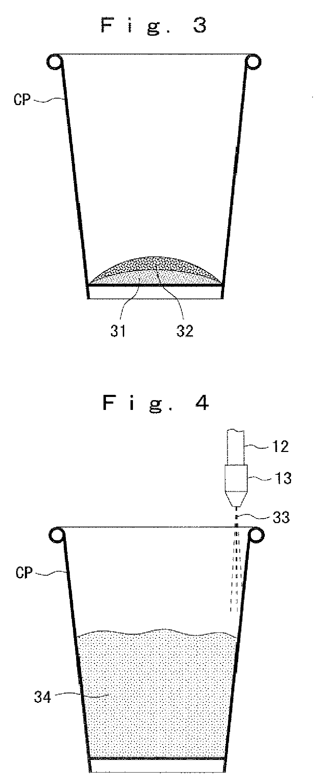

FIG. 1 to FIG. 6 show an embodiment of the present invention. FIG. 1 shows a configuration of a device for brewing espresso-based beverage; FIG. 2 is a flow chart of a method of preparing the espresso-based beverage; and FIG. 3 to FIG. 6 show states on the way of preparing the espresso-based beverage.

First, the configuration of the device for brewing espresso-based beverage will be described with reference to FIG. 1.

Reference numeral 1 in FIG. 1 denotes a first material supplier; 2, a second material supplier; 3, a third material supplier; 4, a fourth material supplier; 5, a pump; 6, a hot water generator; and 7, a coffee extractor.

The first material supplier 1 has a storage chamber for storing ground-coffee for espresso and a supplying mechanism for supplying a prescribed quantity of the ground-coffee. The second material supplier 2 has a storage chamber for storing milky foam powder and a supplying mechanism for supplying a prescribed quantity of the milky foam powder.

In this context, the term "milky foam powder" is used as the term including both foamed milk powder and whipped cream powder, and the term "milky foam" is used as the term including both foamed milk and whipped cream.

The third material supplier 3 has a storage chamber for storing sugar powder and a supplying mechanism for supplying a prescribed quantity of sugar powder. The fourth material supplier 4 has a storage chamber for storing topping powder such as cinnamon powder or cocoa powder and a supplying mechanism for supplying a prescribed quantity of topping powder.

Though not shown, a guide tube for guiding the material to be fed into the coffee extractor 7 is connected to the outlet of the first material supplier 1, and guide tubes for guiding the materials to be fed into a cup CP are connected to the respective outlets of the second to fourth material suppliers 2-4.

A variable pressure type pump, which permits setting the discharge pressure at any desired level, is used as the pump 5. The hot water generator 6 has a built-in electric heater for heating clean water passing an internal circuit to a prescribed temperature. The coffee extractor 7, capable of extracting espresso coffee, has a cylinder into which ground-coffee is put, a replaceable extraction filter and so on.

The inlet of the pump 5 is connected to a clean water tank 9 via a duct 8, and the outlet of the pump 5 is connected to the inlet of the hot water generator 6 via a duct 10. The outlet of the hot water generator 6 is connected to the inlet of the coffee extractor 7 via a duct 11, and a jet nozzle 13 is attached to the end of a hot water supplying pipe 12 branching out of the duct 11. This jet nozzle 13, intended to vigorously inject the hot water fed through the hot water supplying pipe 12, may be either a single fluid type having only a pressurizing orifice or a double-fluid mixing type having a pressurizing orifice and an air intake leading to around the orifice.

Normally closed electromagnetic valves 14 and 15 for switching over the flow of the hot water from the hot water generator 6 intervene on the way of the duct 11 and the hot water supplying pipe 12, respectively. A coffee supplying pipe 16 is connected to the outlet of the coffee extractor 7, and the lower end of this coffee supplying pipe 16 and that of the jet nozzle 13 are arranged downward so as to be directed into the cup CP.

In FIG. 1, reference numeral 17 denotes a controller; 18, a material supplier driver; 19, a pump driver; 20, a hot water generator driver; 21, a coffee extractor driver; 22, an electromagnetic valve driver; and SO, a request for sale of the espresso-based beverage.

The controller 17 has a microcomputer configuration, whose memory stores programs for controlling the preparation of espresso-based beverages and various recipe data regarding their preparation. This controller 17 delivers control signals to the material supplier driver 18, the pump driver 19, the hot water generator driver 20, the coffee extractor driver 21 and the electromagnetic valve driver 22 in accordance with the programs respectively.

The material supplier driver 18 selectively delivers drive signals to the drive power sources (motors or solenoids) of the supplying mechanisms for the four material suppliers 1 to 4. The pump driver 19 delivers a drive signal corresponding to the discharge pressure to the drive power source (motor) of the pump 5. The hot water generator driver 20 delivers a drive signal to the electric heater of the hot water generator 6. The coffee extractor driver 21 delivers a drive signal to the coffee extractor 7. The electromagnetic valve driver 22 selectively delivers a drive signal for opening to the electromagnetic valves 14 or 15.

Next, the method of preparing espresso-based beverages by using the above-described hardware configuration will be described with reference to FIG. 2 and FIG. 3 to FIG. 6.

When one of espresso-based beverages, for instance a sugared cappuccino in this case, is to be prepared in accordance with a request SO for sale, the cup CP fed from a cup supplier not shown is placed in a prescribed position. Then, as shown in FIG. 3, the second material supplier 2 is operated to put milky foam powder 31 in a prescribed quantity into the cup CP, and at the same time the third material supplier 3 is operated to put sugar powder 32 in a prescribed quantity into the cup CP (step S1 in FIG. 2).

Then, the pump 5 is operated and the electromagnetic valve 15 is opened. As shown in FIG. 4, a prescribed quantity of hot water 33 is injected from the jet nozzle 13 of the hot water supplying pipe 12 into the cup CP to dissolve the milky foam powder 31 and the sugar powder 32. At the same time, the milky foam powder 31 is beaten to form milky foam 34 (step S2 in FIG. 2).

The discharge pressure of the pump 5 then is substantially equal to the discharge pressure at the time of extracting espresso coffee to be described afterwards. When the hot water 33 is injected into the cup CP, the temperature of the hot water 33 accelerates the dissolution of the milky foam powder 31 and the sugar powder 32, and the force of the hot water 33 and the convection in the cup CP perform the mixture, thereby the milky foam powder 31 is beaten to generate milky foam 34.

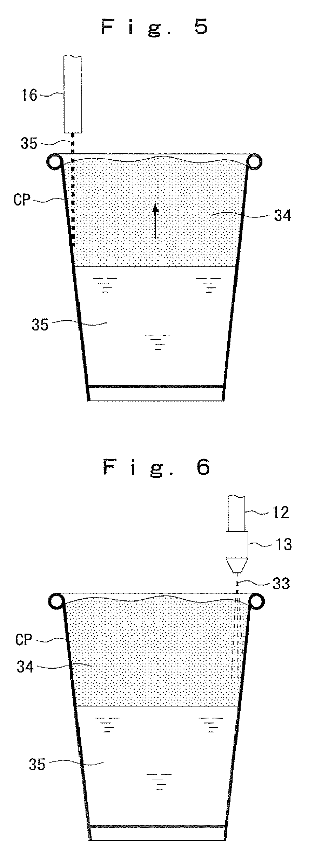

Next, the first material supplier 1 is operated to put a prescribed quantity of ground-coffee into the coffee extractor 7 . Then, the pump 5 is operated, the electromagnetic valve 15 is closed and the electromagnetic valve 14 is opened to supply hot water with a pressure adapted for extracting espresso coffee into the coffee extractor 7 via the duct 11 to extract espresso coffee. As shown in FIG. 5, the espresso coffee 35 extracted in a prescribed quantity is poured into the cup CP via the coffee supplying pipe 16 (step S3 in FIG. 2).

The espresso coffee 35 is slowly poured through the coffee supplying pipe 16 into the cup CP and the surface of the milky foam 34 gradually rises with the progress of coffee pouring. Thereby, the milky foam 34 floats on the surface of the espresso coffee 35.

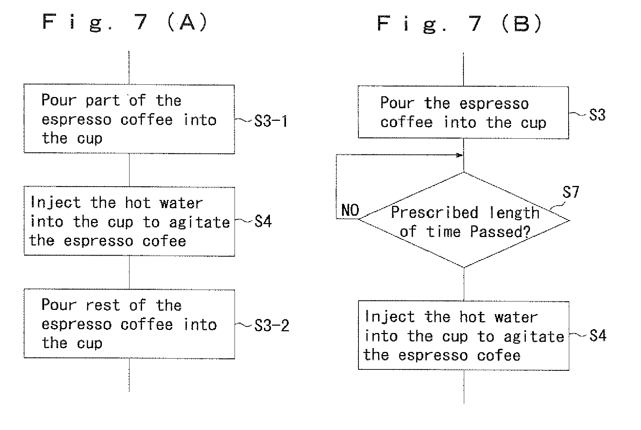

Then the pump 5 is operated again, the electromagnetic valve 14 is closed and the electromagnetic valve 15 is opened. As shown in FIG. 6, a prescribed quantity of hot water 33 is injected from the jet nozzle 13 of the hot water supplying pipe 12 into the cup CP, the espresso coffee 35 poured into the cup CP is agitated to mix it with the earlier dissolved sugar powder 32 to uniformize the taste (step S4 in FIG. 2).

As the injection of hot water 33 then is intended to agitate only the espresso coffee 35, the discharge pressure of the pump 5 is kept lower than at the time of dissolving and beating the powder described above, and the input quantity of the hot water 33 is minimized to prevent the espresso coffee 35 from being diluted. The force of the hot water 33 injected into the cup CP generates convection in the espresso coffee 35, and the convection agitates and mixes the espresso coffee 35 and the earlier dissolved sugar powder 32 to uniformize the taste.

Then it is judged whether or not any topping is needed. If it is needed, the fourth material supplier 4 is operated to put a prescribed quantity of topping powder on the milky foam 34. If not needed, no topping powder is fed (steps S5 and S6 in FIG. 2).

This completes the preparation of cappuccino in the cup CP. The method of preparing any other espresso-based beverage than cappuccino (a beverage prepared by putting milky foam on espresso coffee) is basically the same as the above described method preparation except some differences in the proportion and type of the material to be added.

While the espresso coffee 35 is agitated by injecting a small quantity of the hot water 33 from the jet nozzle 13 of the hot water supplying pipe 12 into the cup CP after the espresso coffee 35 is poured into the cup CP in the preparation flow charted in FIG. 2, this injection of the hot water 33 for agitation may be performed midway on the pouring of the espresso coffee 35 into the cup CP.

FIG. 7A shows one example of such modification, wherein the extraction and supplying of the espresso coffee 35 are accomplished in two steps (steps S3-1 and S3-2) and the hot water 33 for agitation is injected on the way (step S4). During the first extraction and supplying at step S3-1, part of the espresso coffee 35 (any quantity smaller than the total) is poured into the cup CP, and during the second extraction and supplying at step S3-2, the remaining quantity of the espresso coffee 35 (the total minus the first input) is poured into the cup CP.

FIG. 7B shows another example, wherein the hot water 33 for agitation is injected (step S4) after the lapse of a prescribed length of time (step S7) from the start of supplying the espresso coffee 35 (step S3). After the lapse of the prescribed length of time from the start of supplying the espresso coffee 35, the supplying of the espresso coffee 35 and the injection of hot water 33 for agitation are carried out simultaneously until either is completed.

By injecting the hot water 33 for agitation midway on the pouring of the espresso coffee 35 into the cup CP, intended agitation and mixing can be efficiently accomplished with a smaller quantity of injection because the quantity of the espresso coffee 35 to be agitated is smaller.

According to the beverage preparing method described above and the beverage dispenser, espresso-based beverages can be prepared in a more sanitary way by forming the milky foam 34 in the cup CP than the conventional method by which milky foam is formed by using a mixing ball with an agitator and putting the milky foam so formed into a cup, and moreover serves to prevent a temperature drop of the milky foam 34 and accordingly of the espresso-based beverage that is prepared.

Since the mixing ball with the agitator and the step of washing the mixing ball every time it is used become unnecessary, it is possible to reduce the hardware cost and simplify the operation control related to the preparation of the espresso-based beverage

Furthermore, by slowly pouring the espresso coffee 35 into the cup CP from the coffee supplying pipe 16 after the milky foam 34 is generated, a shape in which the milky foam 34 is put on the espresso coffee 35, namely a better looking espresso-based beverage can be prepared. Moreover, by pouring the espresso coffee 35 along the inner wall of the cup CP, the earlier formed milky foam 34 can be prevented from being smeared by the espresso coffee 35.

In addition, since the small quantity of the hot water 33 is injected into the cup CP to agitate the espresso coffee 35 after or while the espresso coffee 35 is poured into the cup CP, the sugar powder 32 early dissolved and the espresso coffee 35 can be well mixed to uniformize the taste, especially when sugar is putted into the beverage.

Furthermore, since the variable pressure type pump 5 is used in common for supplying hot water to the cup CP and for supplying hot water to the coffee extractor 7, the use of separate pumps differing in discharge pressure can be dispensed with to save the hardware cost correspondingly.

In the above-described embodiment, although the espresso coffee 35 is agitated by injecting the small quantity of the hot water 33 into the cup CP either after or during the pouring of the espresso coffee 35 into the cup CP, this agitation is not always required for preparing a sugarless espresso-based beverage.

Furthermore, the hardware configuration, which prepares the espresso-based beverage in the cup CP placed in a prescribed position, is illustrated. However, a hardware configuration, which has a holder capable of holding the cup CP detachably and a holder mover capable of moving the holder two-dimensionally on a planar coordinate system, can be adopted. According to this configuration, it is possible to intermittently move the cup CP so as to stop in the material supplying position, the hot water supplying position, the coffee supplying position and elsewhere, and to prepare the espresso-based beverage in the process of this intermittent moving, and to offer the cup CP containing the prepared beverage to the purchaser.

Furthermore, the hardware configuration, which supplies the ground-coffee for espresso coffee from the first material supplier 1 to the coffee extractor 7, is illustrated. However, for preparing more authentic espresso coffee, a hardware configuration, which has a material supplier such as the first material supplier 1 for storing coffee beans for espresso coffee and a mill for grinding the coffee beans and supplying the ground-coffee to the coffee extractor 7, may be adopted. Of course, since moisture would be detrimental to the flavor of ground-coffee or coffee beans, this could be prevented by housing the first material supplier 1 and the above material supplier in a refrigerator permitting temperature control.

The preferred embodiments of the invention described in this specification is only illustrative but in no way limits the scope of the invention, which is specified in the appended claims, and all the modifications that fit what the claims mean are included in the scope of the invention.

## Claims

1. A beverage preparing method for beverage dispenser, comprising the steps of:
putting a prescribed quantity of milky foam powder (31) into a cup (CP);
injecting a prescribed quantity of hot water (33) from a jet nozzle (13) into the cup (CP) to dissolve and beat the milky form powder (31) to generate milky foam (34); and
pouring a prescribed quantity of espresso coffee (35) from a coffee supplying pipe (16) into the cup (CP).

2. The beverage preparing method according to claim 1, further comprising the step of:
agitating the espresso coffee (35) poured into the cup (CP) by injecting hot water (33) in a quantity smaller than the prescribed quantity from the jet nozzle (13) into the cup (CP).

3. The beverage preparing method according to claim 1, further comprising the step of:
putting a prescribed quantity of topping powder on the milky foam (34).

4. A beverage dispenser comprising:
a milky foam powder supplier (2) for putting a prescribed quantity of milky foam powder (31) into a cup (CP);
a hot water supplier (6) for supplying a prescribed quantity of hot water (33) to the cup (CP) through a jet nozzle (13);
a espresso coffee supplier (7) for pouring a prescribed quantity of espresso coffee (35) into the cup (CP) through a coffee supplying pipe (16); and
a beverage preparation means (17) for controlling operations of the suppliers (2, 6 and 7) so as to put the prescribed quantity of the milky foam powder (31) into the cup (CP), and to inject the prescribed quantity of the hot water (33) from the jet nozzle (13) into the cup (CP) to dissolve and beat the milky foam powder (31) to generate milky foam (34), and to pour the prescribed quantity of the espresso coffee (35) from the coffee supplying pipe (16) into the cup (CP).

5. The beverage dispenser according to claim 4, wherein:
the beverage preparation means (17) controls the operation of the hot water supplier (6) so as to agitate the espresso coffee (35) poured into the cup (CP) by injecting hot water (33) in a quantity smaller than the prescribed quantity.

6. The beverage dispenser according to claim 4, further comprising:
a topping powder supplier (4) capable of putting a prescribed quantity of topping powder into the cup (CP),
wherein the beverage preparation means (17) controls the operation of the topping powder supplier (4) so as to put the prescribed quantity of the topping powder on the milky foam (34).
